# EUROPEAN PATENT APPLICATION

(11) **EP 2 940 993 A1**
(43) Date of publication of application: **04.11.2015**
(21) Application number: 14811494.5
(22) Date of filing: 09.06.2014
(51) Int. Cl.: H04N 7/00, A41D 1/00

(54) **SPORTS GARMENT FOR FIRST-PERSON VIEW EVENT BROADCASTING**

(30) Priority: 14.06.2013 ES 201330748 U
(71) Applicant: First Vision Technologies S.L., 08001 Barcelona (ES)
(72) Inventor: ILDEFONSO HUERTAS, José Antonio, 08001 Barcelona (ES)
(74) Representative: Monzón de la Flor, Luis Miguel
(86) International application number: PCT/ES2014/070476
(87) International publication number: WO 2014/198987

(57) **Abstract**

Sports garment to transmit events in first person, which integrates the following integrated in the t-shirt:
- a video camera (4), incorporating an optics and a motherboard with an image processing software necessary for its transmission; the visor whereof protrudes through a small buttonhole towards the outside of the sports garment;
- a microphone (5), which captures the ambient and sportsperson's sounds;
- an array of electronic circuits which encode (6) and transmit (7) the video and audio signals in wireless form and coded;
- a transmission antenna (3) of the audio and video signals; and
- an array of batteries (8) to supply the previous devices.

Where it may additionally have a pulsometer or speedometer, and have located all the elements necessary for the transmission distributed through different parts of the t-shirt or integrated in a flexible board. The elements are located and fixed in the t-shirt removably, either by sewing, gluing, housed in a space of the t-shirt.

## Description

### OBJECT OF THE INVENTION

We live in an audiovisual society, wherein the consumption of images has exponentially increased in recent years. Internet and the TV serve as a basis for the development of a large number of contents, among which we can highlight those related to sport, so that sports transmissions are a booming business which generates large profits globally.

The present invention relates to a garment for sportsmen, which allows the transmission of video in first person, since the viewpoint is the same as that of the sportsman, of sports events such as football, basketball, athletics,... and in general any individual or team sport, which is performed outdoors or indoors, making it possible to create a new viewpoint in sports transmissions: the viewpoint in first person, that of the actual sportsmen.

### BACKGROUND OF THE INVENTION

The transmission of sports events in first person is already possible in certain sports, such as motor racing, motorcycling, extreme sports, etc. wherein it is possible to couple a subjective camera and a signal of magnitude without it affecting the sportsman, since it is integrated in the vehicle or in the special suit worn by this type of sportsmen. However, in sports where the sports clothing is very light it has still not been possible to implement this type of transmissions due to technological reasons, since until recently electronic devices and especially the necessary battery occupied a space and had a weight which hindered the practice of the sport.

### DESCRIPTION OF THE INVENTION

The sports garment object of the present invention enables, without disturbing the sportsman in his movements, the recording and wireless transmission of audio and video in real time, during the practice of sports wherein until now it has not been possible, such as football, rugby, basketball, tennis, athletics, etc. With this garment it is possible to see and hear what the sportsman sees, without this causing any inconvenience for the sportsman and without its presence being noticeable for the spectator and sportsmen.

This sports garment consists of a standard t-shirt for the sport and/or the team of the wearer, integrating the following elements:
- a video camera incorporating the optics and the image processing software necessary for its transmission; the visor whereof protrudes through a small buttonhole towards the outside of the sports garment;
- a microphone which captures the ambient and sportsperson's sounds;
- an electronic circuit which codes and transmits the video and audio signals in wireless form and coded;
- a transmission antenna of the audio and video signals; and
- an array of batteries to supply the previous devices.

The aforementioned elements may be distributed through different parts of the t-shirt fixed to the garment's fabric or integrated in a flexible and light board, fixed on the front area at the height of the chest, on the inside or outside of the garment's fabric.

The t-shirt will be provided with the means necessary to be able to house and fix the different elements necessary for the removable transmission. The fixing can be performed among other forms by sewing, or by adhesive, or housed in a space, either interior or exterior, as suitable.

If a board is used which integrates the elements necessary for the operation of the transmission equipment, it is either fixed sewn or adhered internally and in the front face of the t-shirt, covered by a piece of fine rubber and/or a piece of fine fabric; or in a housing existing internally, in the front face of the t-shirt, to allow its removal once the transmission has finished, before washing or cleaning the garment.

Complementarily, the sports garment may have a pulsometer and a speedometer (or another type of sensor), with the pulsometer preferably being located on the chest beside the optics and the speedometer in the camera motherboard.

In this case, the transmitter will not only transmit the video and audio data, but it will also transmit the pulsometer and speedometer data and the camera configuration data, it being possible to perform adjustments of the camera at a distance, block the exposure, i.e. by a bidirectional communication it is possible to modify the camera configuration during the transmission.

### DESCRIPTION OF THE FIGURES

To complement the description being made and in order to aid towards the understanding of the characteristics of the invention, a set of drawings is attached to the present specification wherein, with illustrative and non-limitative character, the following has been represented:
Figure 1 shows a possible embodiment wherein a sports t-shirt (1) is observed provided with the necessary elements to transmit image and sound whilst the sportsman is playing their sport.

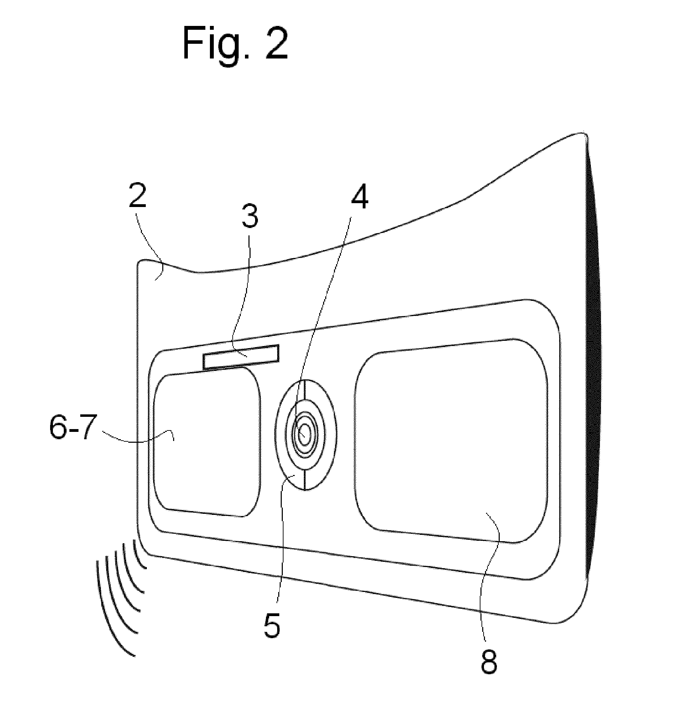

Figure 2 is a view of the board (2) by the front face, whereon it is adhered to the t-shirt.
Figure 3 is an operation block diagram of the elements integrated in said board (2) which is fixed on the sports t-shirt.

### PREFERRED EMBODIMENT OF THE INVENTION

As previously mentioned, the sports garment will have the means necessary to house and fix all the elements necessary for the transmission of the images and sound captured by the elements housed and fixed in the t-shirt.

The elements necessary for the transmission are:
- a video camera incorporating the optics and a motherboard with an image processing software necessary for its transmission; the visor whereof protrudes through a small buttonhole towards the outside of the sports garment;
- a microphone which captures the ambient and sportsperson's sounds;
- an array of electronic circuits which encode and transmit the video and audio signals in wireless form and coded;
- a transmission antenna of the audio and video signals; and
- an array of batteries to supply the previous devices, the batteries being rechargeable and removable

Said elements can either be grouped under a light flexible board and with little thickness or be distributed through different places on the t-shirt, in which case a possible solution, preferably, but not limitatively, would be:
- On the chest the optics of a camera, with an image sensor and the lens
- On the left shoulder, the right shoulder and rear part of the t-shirt it is possible to distribute the remaining elements such as the radiofrequency transmitter and the antenna, the camera motherboard, and the array of batteries.

Where all the elements are interconnected by a flexible printed circuit.

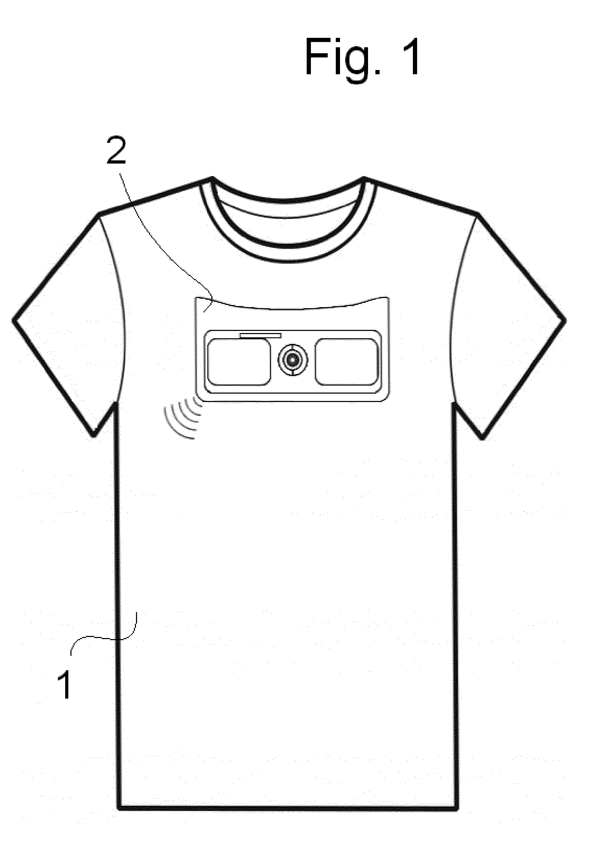

In an alternative embodiment, wherein all the elements are mounted on a flexible board, which is very light and with little thickness (2), as shown in figure 1, a t-shirt or sports garment (1) is observed which in the front, at the height of the sportsman's chest it has the flexible board, very light and with little thickness (2), fixed inside the t-shirt (1) covered by a piece of fine rubber and a piece of fine fabric, sewn or adhered to the t-shirt, which integrates the elements necessary for the operation of a camera (4), the visor of which protrudes through a small buttonhole towards the front, so that it is totally covered in the interior of the t-shirt, clearly capturing video images from the same viewpoint as the sportsman.

In this form of embodiment, a video camera (4) and a microphone (5) are integrated in the board (2, which collect audio and video data, which are sent to a signal coder (6) which converts the data into a radio signal, which a transmitter (7) is in charge of transmitting with the aid of an antenna (3). The entire circuit is supplied with an array of batteries (8) very compact, rechargeable and removable.

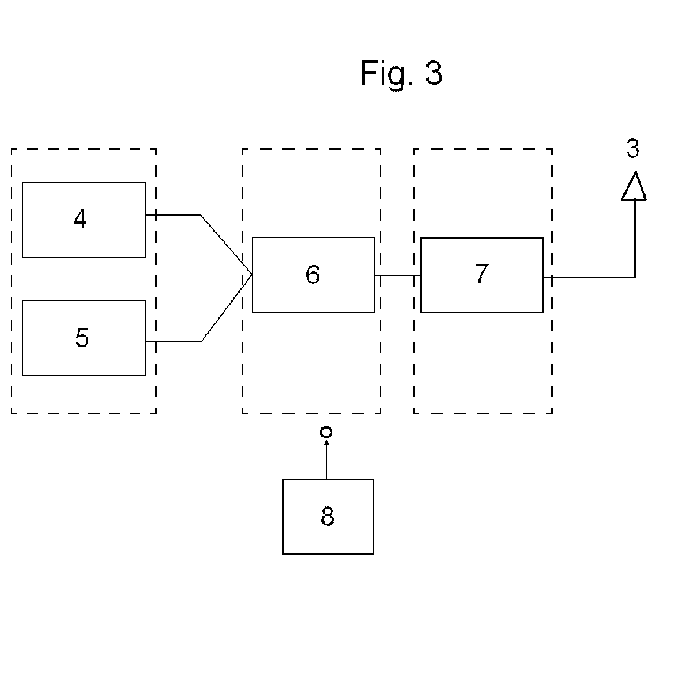

Figure 3 shows the functional elements which integrate the transmission device, all included in the board (2) and mounted according to this scheme:
- A video camera (4) which integrates: optics, image sensor and image processor.
- A microphone (5).
- A coder (6) which compresses and codes the audio and video signal.
- A transmitter (7) of the video and audio signal wirelessly through the antenna (3).
- An array of batteries (8).
- A small antenna (3).

With this garment, the transmission of a sports event can be made much more dynamic and personal, from the time when it can be transmitted from the viewpoint of the sportsman, both what he sees and hears and says. To capture the video and audio signals in a place close to the area where the sportsman moves, the corresponding receiving antennas shall be installed, in a manner equivalent to any other wireless transmission, whether sporting or not.

All the elements such as the camera, electronic circuits, the array of batteries are covered by a gel which, in the case of impact, protects the sportsman, to the elements which makes them waterproof, which is breathable and light.

Having sufficiently described the nature of the invention and an example of a preferred embodiment, it must be noted that the materials, form, size and layout of the described elements may be modified, provided that this does not involve altering the essential characteristics of the invention described in the following claims:

## Claims

1. Sports garment to transmit events in first person, of the standard sports t-shirt-type for the sport and/or the team of the wearer, **characterised in that** the following is integrated in the t-shirt:
- a video camera (4), incorporating optics and a motherboard with an image processing software necessary for its transmission; the visor whereof protrudes through a small buttonhole towards the outside of the sports garment;
- a microphone (5), which captures the ambient and sportsperson's sounds;
- an array of electronic circuits which encode (6) and transmit (7) the video and audio signals in wireless form and coded;
- a transmission antenna (3) of the audio and video signals; and
- an array of batteries (8) to supply the previous devices.

2. Sports garment, according to claim 1, **characterised in that** the sports garment also has a pulsometer and a speedometer (or another type of sensor),

3. Sports garment, according to claim 2, **characterised in that** the pulsometer is preferably located on the chest beside the optics and the speedometer in the camera motherboard.

4. Sports garment, according to claim 2 or 3, **characterised in that** the array of electronic circuits which transmit (7) will not only transmit the video and audio data, but they will also transmit the pulsometer and speedometer data and the camera configuration data, it being possible to perform a bidirectional communication, which makes it possible to modify the camera configuration during the transmission.

5. Sports garment, according to any of the previous claims, **characterised in that** all the previous elements are integrated in a flexible and light board (2).

6. Sports garment, according to claim 5, **characterised in that** the flexible and light board (2) is housed fixed in the front area at the height of the chest, on the inside of the garment's fabric.

7. Sports garment, according to claim 6, **characterised in that** the board (2), which integrates the elements necessary for the operation of the transmission equipment, is fixed sewn or adhered internally and in the front face of the t-shirt (1), at the height of the chest, covered by a piece of fine rubber and/or a piece of fine fabric.

8. Sports garment, according to claim 1, **characterised in that** the distribution of the different elements in the t-shirt or sports garment is as follows:
- On the chest of the t-shirt the camera optics, with the image sensor and the lens
- On the left shoulder, the right shoulder and rear part of the t-shirt it is possible to distribute the remaining elements such as the radiofrequency transmitter and the antenna, the camera motherboard, and the array of batteries.
where all the elements are interconnected by a flexible printed circuit.

9. Sports garment, according to any of the previous claims, **characterised in that** the sports garment is provided with the means necessary to be able to house and fix the different elements necessary for the removable transmission, where the fixing can be performed among other forms by sewing, or by adhesive, or housed in a space, either interior or exterior, of the sports garment.

10. Sports garment, according to any of the previous claims, **characterised in that** the elements such as the camera, the electronic circuits, the array of batteries, are covered by a gel which makes them waterproof, is breathable and light.
